(19) Europäisches Patentamt
European Patent Office
Office européen des brevets

(11) Veröffentlichungsnummer: **0 101 541**
**B1**

(12) # EUROPÄISCHE PATENTSCHRIFT

(45) Veröffentlichungstag der Patentschrift: **19.04.89**

(21) Anmeldenummer: **83106149.4**

(22) Anmeldetag: **23.06.83**

(51) Int. Cl.⁴: **C 08 F 230/08**, C 08 F 218/02, C 08 F 8/26, C 08 F 299/02, C 09 J 3/14

(54) **Copolymerisate mit ethylenisch ungesättigten Grundbausteinen und mehreren funktionellen Gruppen.**

(30) Priorität: **23.07.82 DE 3227552**

(43) Veröffentlichungstag der Anmeldung: **29.02.84 Patentblatt 84/9**

(45) Bekanntmachung des Hinweises auf die Patenterteilung: **19.04.89 Patentblatt 89/16**

(84) Benannte Vertragsstaaten: **AT BE CH DE FR GB IT LI LU NL SE**

(56) Entgegenhaltungen: **FR-A-2 057 376**

(73) Patentinhaber: **HÜLS AKTIENGESELLSCHAFT, Paul-Baumann- Strasse 1, D-4370 Marl 1 (DE)**

(72) Erfinder: **Bernhardt, Günther, Dr., Rheinstrasse 33, D-5205 St. Augustin (DE)**
Erfinder: **Hanisch, Horst, Dr., Fröbelweg 19, D-5202 Hennef (DE)**

**EP 0 101 541 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Gegenstand der vorliegenden Erfindung sind neue, als Haftmittel wirksame Copolymerisate mit mindestens zwei Grundbausteinen mit zwei Ketten-C-Atomen, wobei einer der Grundbausteine eine Alkoxysilylgruppe enthält. Weiterer Gegenstand der vorliegenden Erfindung sind Copolymerisate, die bei der Herstellung dieser neuen polymeren Haftmittel anfallen sowie ein Verfahren zur Herstellung der neuen polymeren Haftmittel aus diesen neuen, als Zwischenprodukte anfallenden, Copolymerisaten.

Durch die DE-OS-2 624 888 sind bereits Copolymere bekannt bei denen einer der Grundbausteine mit zwei Ketten-C-Atomen eine Alkoxysilylgruppe enthält, die direkt mit dem Grundbaustein verbunden ist. Der weitere ethylenisch ungesättigte Grundbaustein mit zwei Ketten-C-Atomen ist jedoch nur mit einer Säure- oder Säureanhydrid- oder Estergruppe verbunden. Diese Verbindungen eignen sich nicht direkt als Haftvermittler zwischen Polymeren und anorganisch oxidischem Material.

Sie zeigen nur dann eine besondere haftvermittelnde Wirkung, wenn sie im Gemisch mit organofunktionellen Silanen eingesetzt werden.

Es ist weiterhin zum Beispiel durch die DE-PS-1 270 716 bekannt, daß organofunktionelle Alkoxysilylverbindungen, die als funktionelle Gruppe eine Acryl- oder Methacrylgruppe enthalten, ein gutes Haftvermögen zwischen Füllstoffen und Polymeren besitzen. Die Verwendung dieser Verbindungen als Haftvermittler ist jedoch dadurch begrenzt, daß die Methacrylatkomponente im Molekül in verhältnismäßig hoher Konzentration anwesend ist, so daß diese Verbindungen bei einer gleichmäßigen Verteilung in dem zu verbindenden Gemisch aus Polymeren und Füllstoff oft in zu großer Konzentration eingesetzt werden. In vielen Fällen würde eine niedrigere Konzentration von Acrylatgruppen im Verhältnis zu den Alkoxysilylgruppen ebenso gut die Haftfestigkeit am Polymerisat fördern oder erhöhen.

Es bestand deshalb die Aufgabe,

a) eine neue Klasse von Haftvermittlern zur Verfügung zu stellen, die sowohl Acrylat- oder Methacrylatgruppen als auch Alkoxysilylgruppen enthalten, in denen die Konzentration von Acrylat- oder Methacrylatgruppen und Alkoxysilylgruppen innerhalb eines weiten Bereichs absolut oder relativ zueinander variiert werden kann und die
b) mindestens eine gleich gute haftvermittelnde Wirkung, wie die Silane der DE-PS-1 270 716 besitzen. Eine weitere Aufgabe bestand darin, ein Verfahren zur Herstellung solcher Haftvermittler aufzufinden.

In Erfüllung dieser Aufgabe wurden nun Copolymere, die mindestens zwei verschiedene Grundbausteine mit jeweils zwei Ketten-C-Atomen enthalten, wobei einer der Grundbausteine mit einer Alkoxysilylgruppierung verknüpft ist, gefunden, die dadurch gekennzeichnet sind, daß ein Grundbaustein einen α-Halogencarbonsäurerest, dessen Halogenatom gegebenenfalls durch ein Acryl- oder Methacrylsäurerest substituiert sein kann, enthält, und daß bei dem zweiten Grundbaustein der Alkoxysilylrest entweder direkt oder über eine

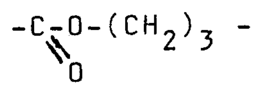

Gruppe mit dem Grundbaustein verbunden ist.

Weiterhin wurde ein Verfahren zur Herstellung derjenigen Polymerisate gefunden, bei denen einer der Grundbausteine einen Acryl- oder Methacrylsäurerest enthält. Dieses Verfahren ist dadurch gekennzeichnet, daß man erfindungsgemäße Copolymere mit Grundbausteinen mit jeweils zwei Ketten-C-Atomen, bei denen ein Grundbaustein mit einem α-Halogencarbonsäurerest verknüpft ist, mit einem Alkali- oder Erdalkalisalz der Acryl- oder Methacrylsäure umsetzt.

Erfindungsgemäße Copolymerisate, bei denen einer der Grundbausteine mit einem Acryl- oder Methacrylsäurerest verknüpft ist, zeigen ausgezeichnete haftvermittelnde Wirkung zwischen anorganisch oxidischen Materialien und Polymeren. Diese Wirkung tritt sowohl dann ein, wenn der Grundbaustein mit dem Acryl- oder Methacrylsäurerest nur zu mindestens 0,5 Gew.-% oder auch zu maximal 99,5 Gew.-% im Polymeren vorhanden ist. Dazwischen sind sämtliche Zwischenwerte möglich.

Es ist deshalb erfindungsgemäß auch möglich, daß die neuen Copolymeren auch noch weitere an sich bekannte Grundbausteine mit zwei Ketten-C-Atomen enthalten, die weder einen Acryl- oder Methacrylsäurerest noch einen Alkoxysilylrest enthalten. Solche zusätzlichen Grundbausteine können in dem Polymeren in maximal solchen Mengen vorhanden sein, daß der Anteil der Grundbausteine mit Alkoxysilyl- und (Meth)Acrylat-Gruppen jeweils mindestens 0,5 Gew.-% beträgt.

Die Grundbausteine mit dem α-Halogencarbonsäurerest leiten sich von α-Chlor- oder α-Bromfettsäurevinylestern ab. Der Fettsäurerest ist vorzugsweise ein solcher mit zwei oder drei C-Atomen, jedoch können auch höhere Fettsäuren mit bis zu 18 C-Atomen eingesetzt werden. Bevorzugte Monomere sind die α-Chlor- oder Bromessigsäurevinylester.

Die Grundbausteine mit einer Alkoxysilylgruppe sind einerseits die gleichen, die auch in den Verbindungen der DE-OS-2 624 888 enthalten sind. Zusätzlich kann an diesen Grundbausteinen der Alkoxysilylrest aber auch über eine

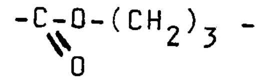

Gruppierung mit einem der C-Atome des Grundbausteins verbunden sein, wie zum Beispiel beim γ-Methacryloxypropyltrimethoxysilan. Beispiele von Monomeren, aus denen diese Grundbausteine gebildet werden, sind die Vinyltrialkoxysilane, deren Alkoxygruppen vorzugsweise bis zu 4 C-Atome besitzen, wie Vinyltrimethoxysilan, Vinyltriethoxysilan, Vinyltris-(2-methoxyäthoxy)-silan und γ-Methacryloxypropyltrimethoxysilan.

Die in den erfindungsgemäßen Copolymeren gegebenenfalls enthaltenen weiteren Grundbausteine, die weder eine Acrylat- oder Methacrylat- noch eine Alkoxysilylgruppe enthalten, leiten sich von solchen Monomeren ab, die sowohl mit dem die Alkoxysilylgruppe enthaltenen ethylenisch ungesättigten Monomeren als auch mit einem den α-Halogencarbonsäurerest enthaltenen ethylenisch ungesättigten Monomeren copolymerisierbar sind, wie beipielsweise Vinylacetat, Vinylpropionat, Vinyllaurat, Vinylstearat, Diäthylmaleinat, Diäthylfumarat, Maleinsäureanhydrid, Äthylacrylat und Methylmethacrylat. Diese hier auch als nichtfunktionelle Grundbausteine bezeichneten, Gruppierungen können durch folgende Formeln gekennzeichnet werden,

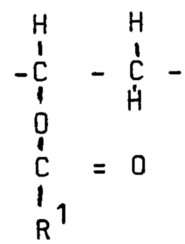

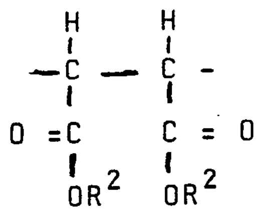

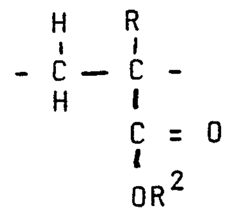

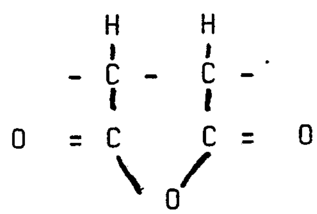

wobei

R für Wasserstoff, Methyl oder Äthyl,

$R^1$ für Wasserstoff oder einen $C_1$-$C_{18}$-Alkylrest,

$R^2$ für Wasserstoff oder einen $C_1$- bis $C_4$-Alkylrest steht. Entsprechende geeignete, nichtfunktionalisierte Vinylmonomere als Ausgangsprodukte für die entsprechenden Bausteine in den Copolymeren sind dem Fachmann ohne weiteres geläufig.

Die erfindungsgemäßen Copolymerisate können weiterhin wahlweise neben oder anstelle des einpolymerisierten nichtfunktionalisierten Monomeren bis zu 99 Gew.-% eines weiteren funktionalisierten Monomeren enthalten, das einem Polymerisat Wasserlöslichkeit oder Wasseremulgierbarkeit verleiht, wie beispielsweise N-Vinylpyrolidon, Methylvinyläther, N-Vinylmorpholinon-3, N-Vinyl-1,3-oxazidinon-2, oder ethylenisch ungesättigten Verbindungen, die über funktionelle Gruppen nachträglich zur Salzbildung mit Säuren oder Basen befähigt sind, aber nicht mit der Alkoxysilylgruppe oder der Halogenfunktion oder der Acrylat- oder Methacrylatfunktion in Reaktion treten, wie beispielsweise Maleinsäureanhydrid, Itakonsäureanhydrid, 2-Diäthylaminoäthylacrylat oder -methacrylat.

Die den einzelnen Grundbausteinen zugrundeliegenden ethylenisch ungesättigten Monomeren lassen sich nach bekannten freiradikalischen Verfahren leicht mischpolymerisieren. Die dabei für die Polymerisation verwendeten Initiatoren sind dafür bekannte Verbindungen, wie beispielsweise organische Peroxyde oder Azoisobuttersäuredinitrile. Als Beispiele seien genannt:

Benzoylperoxyd, Diacetylperoxyd, Methyläthylketonperoxyd, Methylisobutylketonperoxyd, Cyclohexanonperoxyd, Cymolhydroperoxyd, tert.-Butylhydroperoxyd, Di-tert.-butylperoxyd, Dicumylperoxyd, 1,3-Di-tert.-butylperoxy-isopropylbenzol, tert.-Butylperacetat, tert.-Butylperoctoat, tert.-Butylperpivalat, tert.-Butylisononanat. Der Katalysator wird in Mengen von 0,2 bis 3 Gew.-%, bezogen auf das Gewicht des ethylenisch ungesättigten Monomeren zugesetzt, was gewöhnlich genügt, um eine angemessene Reaktionsgeschwindigkeit und einen hohen Monomerumsatz zu erzielen.

Die Polymerisation zu den erfindungsgemäßen Copolymerisaten, bei denen der Carbonsäurerest, der mit dem Grundbaustein verbunden ist, halogensubstituiert ist, kann in Substanz, d. h. ohne die zusätzliche Verwendung eines Verdünnungs- oder Lösungsmittels durchgeführt werden. Vorzugsweise ist sie jedoch als Lösungspolymerisation ausgebildet. Als Lösungsmittel können solche eingesetzt werden, die nicht in

irgendeiner Weise die Polymerisation behindern oder mit Alkoxysilylgruppe oder dem Halogencarbonsäurerest der Vinylmonomeren in irgendeiner Weise reagieren. Geeignete Lösungsmittel sind Fettsäureester, wie beispielsweise Essigsäureäthylester, Ketone, wie beispielsweise Aceton oder Methylethylketon oder aromatische Kohlenwasserstoffe, wie beispielsweise Benzol oder Toluol. Das Gewichtsverhältnis von Vinylmonomeren und Lösungsmitteln kann zwischen 4 : 1 und 1 : 4 betragen.

Die genannte Copolymerisation wird im allgemeinen so durchgeführt, daß man alle Monomeren zusammen in das Reaktionsgefäß bringt und sie regellos nach ihren relativen Konzentrationen und relativen Reaktionsfähigkeiten reagieren läßt, so daß statistische Polymerisate gebildet werden. Zur Vergrößerung oder Verringerung der Uneinheitlichkeit der Polymerisate kann jedoch auch eines oder mehrere der ethylenisch ungesättigten Monomere im Verlauf der Polymerisation zudosiert werden. Es ist weiterhin auch möglich, die Polymerisation als Pfropfcopolymerisation durchzuführen, in dem wahlweise bis zu 3 der den Grundbausteinen entsprechenden ethylenisch ungesättigten Monomeren auf ein vorgebildetes Polymerisat, das die restlichen der in den erfindungsgemäßen Copolymerisaten enthaltenen Grundbausteinen enthält, in an sich bekannter Weise aufgepfropft wird. Die Art dieser Reaktionen ist auf dem Gebiet der freiradikalischen Polymerisation allgemein bekannt.

Die Herstellung der als Haftvermittler wirksamen Polymerisate, bei denen ein Grundbaustein mit einer funktionellen Acryl- oder Methacrylgruppe verbunden ist, erfolgt durch Umsetzung derjenigen Copolymerisate, bei denen einer der Grundbausteine mit einem Halogencarbonsäurerest verbunden ist, mit Alkali- oder Erdalkalisalzen der Acryl- oder Methacrylsäure. Die Alkaliacrylate oder Methacrylate werden in solchen Mengen verwendet, daß pro Grammatom Chlor in dem Ausgangscopolymerisat 1 bis 1,5 Mole der Acrylate oder Methacrylate verfügbar sind. Vorzugsweise beträgt dieses Verhältnis 1 : 1,1.

Eine bevorzugte Ausführungsform der Umsetzung besteht in der Verwendung von Lösungen der obengenannten Ausgangs-Copolymerisate, wie sie zum Beispiel bei der Lösungspolymerisation zur Herstellung der erfindungsgemäßen Copolymerisate mit dem, den Halogencarbonsäurerest enthaltenen Grundbausteinen, anfallen. Das dabei verwendete Lösungsmittel kann jedoch auch nach der Polymerisation durch ein für die Umsetzung geeignetes Lösungsmittel teilweise oder vollständig substituiert werden.

Aufgrund der besonderen Reaktivität der Alkoxysilylgruppe in den entsprechenden Grundeinheiten ist die Auswahl an geeigneten Lösungsmitteln stark eingeschränkt. In der Mehrzahl der Fälle ist die Löslichkeit der Alkaliacrylate und -Methacrylate in den einsetzbaren Lösungsmitteln gering. Dies wirkt sich nachteilig auf die Reaktionsgeschwindigkeit dieser Umsetzung aus, die deshalb im allgemeinen sehr langsam ist.

In weiterer Ausbildung der vorliegenden Erfindung wird dieser Nachteil dadurch überwunden, daß man die Umsetzung mit den Acrylaten in Anwesenheit von Phasentransferkatalysatoren durchführt. Geeignete Phasentransferkatalysatoren sind zum Beispiel Kronenäther oder aber insbesondere quartäre Ammonium- oder Phosphoniumsalze, wie Tetrabutylammoniumchlorid, Tetrabutylammoniumbromid, Tetraphenylphosphoniumbromid, Trimethylbenzylammoniumbromid, Methyltricaprylylammoniumchlorid. Als einsetzbare Kronenäther seien 12-Krone-4, 24-Krone-8, Dibenzo-18-Kronenäther-6 genannt. Weitere verwendbare Kronenäther und Ammonium- oder Phosphoniumsalze sind dem Fachmann aus der Literatur bekannt.

Die in der Reaktion mit den Alkaliacrylaten und Methacrylaten eingesetzten Polymer-Lösungen können verfahrensbedingt noch restliche Initiatormengen, die bei ihrer Herstellung mitverwendet wurden, enthalten. Die Anwesenheit dieser Initiatoren kann bei der Umsetzung mit den Alkaliacrylaten insofern zu Schwierigkeiten führen, als die acrylat- oder methacrylathaltigen Polymerbausteine dadurch zu intramolekularen Vernetzungsreaktionen unter Ausbildung dreidimensionaler Netzwerke angeregt werden. Diese intramolekulare Vernetzung soll jedoch bei der Herstellung dieser Polymeren soweit als möglich verhindert werden.

Bei der Herstellung der erfindungsgemäßen Haftvermittler ist es daher von Vorteil, die in den Ausgangspolymeren enthaltenen restlichen Initiatoren unwirksam zu machen. Dies erfolgt erfindungsgemäß in der Weise, daß diese Polymerisatlösungen vor dem Umsatz mit den Alkali- oder Erdalkaliacrylaten und -Methacrylaten bis zur restlosen Zerstörung der Initiatoren auf Temperaturen oberhalb der Zerfallstemperatur der radikalbildenden Mittel erhitzt werden. Auch durch Zugabe von solchen Stabilisatoren, die als Polymerisationsinhibitoren wirken, wie zum Beispiel Di-tert.-butylkresol, Hydrochinonmonomethyläther, Phenol, Pyrogallol, Hydrochinon oder Phenothiazin können die Initiatoren unwirksam gemacht werden.

Weitere geeignete Stabilisatoren sind dem Fachmann bekannt. Bei Verwendung einer Menge von etwa 0,01 bis 3 Gew.-%, bezogen auf das Polymerisat, verhindern diese Stabilisatoren die intramolekulare Vernetzung des polymeren Haftvermittlers während der Herstellung, Verarbeitung und Lagerung.

Die Umsetzung mit den Acrylaten oder Methacrylaten muß nicht vollständig sein. Es genügt, wenn die Umsetzung soweit abläuft, daß das erhaltene Polymere mindestens 0,5 Gew.-% an Grundbausteinen enthält, an die die Methacrylgruppe geknüpft ist.

Die durch diese Umsetzung erhaltenen Copolymeren wirken als Haftvermittler zwischen Polymeren und Füllstoffen, Pigmenten oder Farbstoffen. Bei den Polymeren handelt es sich um beliebige, durch freiradikalische Reaktionen zu dreidimensionalen Netzwerken modifizierbare Polymerisate. Beispiele solcher Polymerisate sind Polyäthylen, Polypropylen, Äthylen-Propylen-Copolymerisate, Äthylen-Propylen-Dicyclopentadien-Terpolymerisate, Polybutadien, Naturkautschuk, Polyamide, Polyvinylalkyläther, Styrolcopolymerisate, wie Styrol-Butadien-Kautschuk, Vinylchlorid-Copolymerisate, wie Vinylchlorid-Vinylacetat-Copolymerisate, Äthylen-Vinylacetat-Copolymerisate, Polyester oder ungesättigte Polyester oder

Gemische aus diesen Polymerisaten. Besonders gute haftvermittelnde Wirkung zeigen die neuen Co-Polymerisate bei ungesättigten Polyestermassen, besonders wenn diese unter Mitverwendung von copolymerisationsfähigen Lösungsmitteln eingesetzt werden. Die Säurekomponente der Polyester kann dabei bestehen aus ungesättigten Dicarbonsäuren, wie Fumarsäure, Maleinsäure, Maleinsäureanhydrid, Itakonsäure und zusätzlichen gesättigten Dicarbonsäuren, wie Phthalsäure, Isophthalsäure, Adipinsäure usw. Die Alkoholkomponente umfaßt bifunktionelle Alkohole, wie Äthylenglykol, 1,2-Propylenglykol, 1,3-Butylenglykol, Neopentylglykol usw. Geeignete copolymerisationsfähige Lösungsmittel sind beispielsweise Styrol, Diallylphthalat, Acrylsäure-tert.-butylester. Die polymerisationsfähigen Lösungsmittel können bis zu 60 % der Polyesterlösung ausmachen. Die Füllstoffe, Pigmente oder Farbstoffe, mit denen die Polymerisate unter Mitverwendung der beanspruchten neuen Haftvermittler verbunden werden können, umfassen anorganisch oxidische Materialien, wie siliziumdioxydhaltige Stoffe, Metalle und Metallegierungen und Metalloxide. Beispiele für siliziumdioxidhaltige Stoffe sind Glas, Quarz, Keramik, Sand, Ziegel, Asbest und Ton. Als Metall in solchen Verbunden eignen sich hauptsächlich Aluminium, Zink, Zinn, Magnesium, Silber, Nickel sowie Metallegierungen wie Stahl, Chromnickel, Bronze oder auch solche Metalle, die einer Oberflächenbehandlung mit beispielsweise Phosphaten unterzogen sind. Zu den Metalloxiden zählen beispielsweise Aluminiumoxid, Zinkoxid, Titanoxid, Eisenoxid, Chromoxid.

Die Herstellung des Verbundes aus einem Polymeren und den genannten anorganisch oxidischen Materialien mit Hilfe eines erfindungsgemäßen Haftvermittlers erfolgt auf an sich bekannte Weise, wie sie zum Beispiel in der DE-PS-1 270 716 beschrieben ist.

**Beispiel 1**

In einem Rundkolben, der mit Rückflußkühler, Thermometer, Rührer und Gaseinleitungsrohr versehen war, wurden 88,8 g destilliertes Vinylacetat (VAC), 5 g destilliertes Vinylchloracetat (VCAC), 6,2 g destilliertes Vinyltrimethoxysilan (VTMO) und 100 g destillierter Essigsäureäthylester eingewogen und der Kolbeninhalt unter Rühren und langsamem Überleiten von Stickstoff auf 75°C aufgeheizt. Dann wurden 0,1 g Azoisobuttersäurenitril (AIBN) hinzugefügt. Nach Ablauf von 2 und 5 Stunden wurden jeweils weitere 0,1 g AIBN zugesetzt. Nach einer Gesamtreaktionsdauer von 7,5 Stunden wurden 500 ml Toluol zugesetzt und der Essigester innerhalb von 2 Stunden abdestilliert.

Der Kolbeninhalt wurde daraufhin eine weitere Stunde auf 110°C gehalten. Zur Ausbeutebestimmung wurde 1/10 der Gewichtsmenge der Lösung entnommen und das Lösungsmittel am Rotavapor unter vermindertem Druck abgedampft. Der Umsatz betrug 97,5 %. Die red. Viskosität ($\eta_{red}$) einer 1-%-Lösung des Feststoffs in Essigester betrug 0,37 (20°C, Ostwald-Viskosimeter). Die Elementaranalyse ergab einen Siliciumgehalt von 1,18 % und einen Chlorgehalt von 1,51 %.

Der Rest der Lösung, enthaltend 87,75 g Polymerisat, entsprechend 0,0373 Grammatom Chlor, wurde mit Toluol auf 585 g aufgefüllt, mit 0,9 g Tetrabutylammoniumbromid, 0,18 g tert.-Butylbrenzkatechin und 3,86 g (0,041 Mole) festem, gepulverten Na-Acrylat versetzt und die Mischung unter Rühren und einer Stickstoffatmosphäre 3 Stunden auf 110°C gehalten.

Der Feststoff wurde abfiltriert. Die Kochsalzbestimmung nach Volhard ergab 100 % der berechneten Menge, was einer vollständigen Substitution der Chloratome durch Acryloxygruppen entspricht. 100 g des Filtrats wurden mit 260 g Toluol verdünnt und die erhaltene Mischung als Grundierlösung eingesetzt.

An einer im Gießverfahren hergestellten Folie wurde durch IR-Messung die Acrylatdoppelbindung bei ca. 1640 $cm^{-1}$ bestimmt.

5 Objektträger mit fettfreier Oberfläche wurden im Neigungswinkel von ca. 80° aufgestellt und mit der 5-%-igen Grundierlösung benetzt. Nach 10-minütiger Trocknung des Auftrages wurden die grundierten Platten im Trockenschrank bei 110°C eine Stunde nachbehandelt und auf der mit dem Grundiermittel versehenen Fläche mit einer 1 mm starken Schicht eines styrolhaltigen, kochfesten UP-Harzes (Palatal® A 410, Handelsprodukt der BASF), das auf 100 g Harz 2 g Kobaltoctoat und 1 g Acetylacetonperoxyd enthält, versehen.

Nach einer Stunde Lagerung bei 23°C unter einer $CO_2$-Atmosphäre wurden die beschichteten Objektträger 2 Stunden bei 100°C nachbehandelt.

Als Vergleichsproben wurden ungrundierte Objektträger in gleicher Weise mit einer UP-Harzschicht versehen.

Der Verbund zwischen Harzschicht und Glas wurde durch Eintauchen in siedendes Wasser überprüft. Bei den nichtgrundierten Objektträgern löste sich die UP-Harzschicht nach wenigen Minuten, bei den grundierten war sie auch nach 3 h Kochdauer noch immer gut. Der Verbund zwischen Glas und UP-Harz war nach 1 Stunde Kochdauer in Wasser immer noch gut.

**Tabelle 1**

Zusammensetzung
Copolymerisate
Typ "B"**

| Beispiel | VTMO* | VCAC* Gew.-% | VAC* | g Atome reaktives Cl/ 100 g Polymerisat | $\eta_{red}$ |
|---|---|---|---|---|---|
| 2 | 4 | 5 | 91 | 0,0415 | 0,49 |
| 3 | 4 | 10 | 86 | 0,0830 | 0,37 |
| 4 | 4 | 50 | 46 | 0,4149 | 0,34 |
| 5 | 8 | 2 | 90 | 0,0166 | 0,43 |
| 6 | 8 | 5 | 87 | 0,0415 | 0,37 |
| 7 | 15 | 5 | 80 | 0,0415 | 0,28 |
| 8 | 15 | 10 | 75 | 0,0830 | 0,33 |
| 9 | 20 | 5 | 75 | 0,0415 | 0,27 |
| 10 | 20 | 10 | 70 | 0,0830 | 0,28 |

* VTMO: Vinyltrimethoxysilan
VCAC: Vinylchloracetat
VAC: Vinylacetat
** Typ B: Copolymerisat, bei dem einer der ethylenisch ungesättigten Grundbausteine (= Grundbaustein mit zwei C-Atomen in der Kette) mit einem Halogencarbonsäurerest verknüpft ist.

**Beispiele 2 bis 10**

Es wurden mehrere Copolymerisate hergestellt, bei denen einer der ethylenisch ungesättigten Grundbausteine mit einem Halogencarbonsäurerest verknüpft ist. Dazu wurden als äthylenisch ungesättigtem Monomer Vinyltrimethoxysilan (VTMO), Vinylchloracetat (VCAC) und Vinylacetat (VAC) in den in Tabelle 1 angegebenen Gewichtsmengen, auf dem Wege der radikalisch initiierten Lösungspolymerisation gemäß Beispiel 1 umgesetzt. Die portionsweise zugegebene Azoisobuttersäurenitril-Menge wurde so bemessen, daß in weniger als 24 Stunden ein Polymerisationsumsatz von < 98 % erreicht wurde. Als Lösungsmittel diente Essigsäureester, wobei in den einzelnen Beispielen das Verhältnis von Lösungsmittelgewicht zum Gewicht der Monomerengemische im Verhältnis 4 : 1 bis 1 : 4 variiert wurde. Der Essigester wurde in der beschriebenen Weise durch solche Mengen Toluol ersetzt, daß der Gewichtsanteil des Polymerisates in der toluolischen Lösung 15 % betrug.

Nach Zugabe von 0,2 g Hydrochinonmonomethyläther und 0,5 Gew.-% Methyltricaprylammoniumchlorid erfolgt die Bildung des Polymerisates mit dem, eine Acrylgruppe enthaltenden Grundbaustein durch Umsetzung der Lösung mit solchen Mengen festem, gepulvertem Natriumacrylat, daß pro Grammatom Chlor im Ausgangspolymerisat 1,1 Mole Natriumacrylat entfielen. Dabei wurde die Reaktionsmischung solange auf Siedetemperatur gehalten, bis sich mehr als 90 % der stöchiometrisch möglichen Menge Kochsalz abgeschieden hatte. Nach dessen Filtration wurde der Feststoff-Gehalt der erhaltenen Polymer-Lösung durch Zugabe von Toluol auf 5 % eingestellt und die Lösung als Grundiermittel wie in Beispiel 1 beschrieben, eingesetzt und ausgeprüft.

**Beispiel 11**

Ein Copolymerisat, enthaltend als äthylenisch ungesättigte Monomere 3,3 Gew.-% Vinyltriethoxysilan, 5,4 Gew.-% Vinylchloracetat, 40,8 Gew.-% Vinylacetat und 50,5 Gew.-% N-Vinylpyrrolidon, wurde auf dem Wege der Lösungspolymerisation entsprechend Beispiel 1 hergestellt. Eine toluolische Lösung, enthaltend 100 g des Polymerisates in 567 g Toluol, wurde mit 4,63 g Natriumacrylat in Anwesenheit von 1 g Tetrabutylammoniumchlorid und 0,2 g Hydrochinonmonomethylether bei 110°C in 3 h umgesetzt. Nach Filtration wurde die Hälfte dieser Lösung mit 167 g Toluol versetzt und 500 g Wasser hinzugefügt. Die resultierende Emulsion wurde entsprechend Beispiel 1 als Grundiermittel ausgeprüft.

Aus der zweiten Hälfte der toluolischen Ausgangslösung wurde das Toluol abgedampft und der Rückstand in 950 g Wasser aufgenommen. Die erhaltene 5-%-ige Lösung wurde ebenfalls als Grundiermittel eingesetzt und ausgeprüft.

Die Ausprüfung ergab, daß der Verbund zwischen Glas und UP-Harz nach 1 Stunde Kochdauer in Wasser in allen Fällen immer noch gut war.

**Beispiel 12**

Ein Copolymerisat, enthaltend als ethylenisch ungesättigte Monomere 10,3 Gew.-% Vinyl-tris-(2-methoxy-ethoxy)-silan 4,1 Gew.-% Vinylchloracetat und 85,6 Gew.-% Vinylacetat, wurde auf dem Wege der Lösungspolymerisation gemäß Beispiel 1 hergestellt. Eine toluolische Lösung, enthaltend 100 g des Polymerisates in 567 g Toluol wurde mit 4,64 g Kaliummethacrylat in Anwesenheit von 1 g Tetrabutylammoniumbrömid und 0,2 g p-tert.-Butylbrenzcatechin bei 110°C in 2 g umgesetzt. Nach Filtration wurde die Lösung mit 1333 g Toluol verdünnt und entsprechend Beispiel 1 als Grundiermittel ausgeprüft.

Der Verbund von Glas und UP-Harz war nach 2 Stunden Kochdauer in Wasser immer noch gut.

**Beispiel 13**

Ein Copolymerisat, enthaltend 24,5 Gew.-% Methacryloxypropyltrimethoxysilan, 5,5 Gew.-% Vinylchloracetat und 70,0 Gew.-% 2-Ethylhexylacrylat, wurde in toluolischer Lösung durch Polymerisation der Monomeren unter Verwendung von 2 % Benzoylperoxid und 2 % Dodecanthiol (bezogen auf die Summe der Monomeren) hergestellt.

Eine toluolische Lösung, enthaltend 200 g des Polymerisates in 1134 g Toluol wurde mit 9,44 g Natriumacrylat in Anwesenheit von 2 g N-Laurylpyridiniumbromid und 0,4 g Hydrochinon, bei 110°C in 3 h umgesetzt. Nach Filtration wurde diese Lösung mit 666 g Toluol versetzt und in der in Beispiel 1 beschriebenen Weise als Grundiermittel geprüft.

Der Verbund von Glas und UP-Harz war nach 3 h Kochdauer in Wasser immer noch gut.

**Beispiel 14**

Ein Copolymerisat, enthaltend als äthylenisch ungesättigte Monomere 5,1 Gew.-% Vinyltrimethoxysilan, 90,8 Gew.-% Vinylacetat und 4,1 Gew.-% Vinylchloracetat, wurde auf dem Wege der Lösungspolymerisation gemäß Beispiel 1 hergestellt. Eine toluolische Lösung, enthaltend 100 g des Polymerisates in 567 g Toluol, wurde mit 3,52 g Natriumacrylat in Anwesenheit von 1 g Tetrabutylammoniumbromid und 0,2 g Hydrochinonmonomethyläther bei 110°C in 2 h umgesetzt. Nach Filtration des Feststoffes wurde aus der Lösung das Toluol mittels eines Rotationsverdampfers abgedampft.

3 g des Eindampfrückstandes wurden in 4,5 g Styrol gelöst und die Lösung in 92,5 g einer käuflichen UP-Harzmischung (Palatal® A 410) eingerührt.

Nach Zugabe vön 2 g Kobaltoctoat und 1 g Acetylacetonperoxyd wurde soviel der Mischung auf 5 Objektträger aufgestrichen, daß 2 mm starke Schichten entstanden. Nach 1 h Lagerung bei 23°C unter einer $CO_2$-Atmosphäre wurden die beschichteten Glasplatten 2 h bei 100°C nachbehandelt

Nach 1-stündigem Kochen in Wasser war der Verbund UP-Harz Glas immer noch gut.

**Beispiel 15**

Ein Copolymerisat, enthaltend als ethylenisch ungesättigte Monomere 7,0 Gew.-% Vinyltriethoxysilan, 4,1 Gew.-% Vinylchloracetat und 88,9 Gew.-% Vinylacetat, wurde auf dem Wege der Lösungsmittelpolymerisation gemäß Beispiel 1 hergestellt. Eine toluolische Lösung, enthaltend 100 g des Polymerisates in 567 g Toluol wurde mit 3,52 g Natriumacrylat in Anwesenheit von 1 g Tetrabutylammoniumbromid und 0,2 g p-tert.-Butylbrenzcatechin bei 110°C in 2 h umgesetzt. Nach Filtration wurde diese Lösung mit 1333 g Toluol verdünnt und entsprechend Beispiel 1 als Grundiermittel ausgeprüft.

Der Verbund von Glas und UP-Harz war nach 2 h Kochdauer in Wasser immer noch gut.

**Vergleichsbeispiel 1**

Ein Copolymerisat, enthaltend 95,8 Gew.-% Vinylacetat und 4,2 Gew.-% Vinyltriäthoxysilan, wurde entsprechend Beispiel 1 hergestellt. Eine Lösung, enthaltend 50 g des Polymerisats in 950 g Toluol wurde als Grundiermittel ausgeprüft.

Beim Eintauchen in kochendes Wasser löste sich die UP-Harzschicht nach wenigen Minuten vom Objektträger ab.

**Vergleichsbeispiel 2**

Ein Copolymerisat, enthaltend 89,9 Gew.-% Vinylacetat und 10,1 Gew.-% Vinylchloracetat, wurde gemäß Beispiel 1 hergestellt und 50 g des Polymerisates in 2,84 g Toluol mit 4,33 g Natriumacrylat in Anwesenheit von 0,2 g Hydrochinon und 0,3 g Tetraphenylphosphoniumbromid 3 Stunden bei 110°C umgesetzt. Daraufhin wurde vom ausgefallenen Kochsalz abfiltriert und das erhaltene Filtrat wurde mit 666 g Toluol verdünnt und entsprechend Beispiel 1 als Grundiermittel eingesetzt und ausgeprüft.

Beim Eintauchen in siedendes Wasser löste sich die UP-Harzschicht nach wenigen Minuten vom Objektträger ab.

**Patentansprüche** für die Vertragsstaaten: BE, CH, DE, FR, GB, IT, LI, LU, NL, SE

1. Durch radikalische Polymerisation erzeugte Copolymere, die mindestens zwei verschiedene Grundbausteine mit jeweils zwei Ketten-C-Atomen enthalten, wobei einer der Grundbausteine mit einer Alkoxysilylgruppierung verknüpft ist, dadurch gekennzeichnet, daß ein Grundbaustein einen α-Halogencarbonsäurerest, dessen Halogenatom gegebenenfalls durch einen Acrylsäure- oder Methacrylsäurerest substituiert sein kann, enthält, und daß bei einem zweiten Grundbaustein der Alkoxysilylrest entweder direkt oder über eine

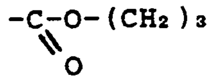

-Gruppe mit dem Grundbaustein verbunden ist.

2. Copolymere gemäß Anspruch 1, dadurch gekennzeichnet, daß sie als weitere Grundbausteine mit zwei Ketten-C-Atomen solche enthalten, die weder mit einem Halogencarbonsäurerest noch mit einer Alkoxysilylgruppe verbunden sind, wobei der Anteil der Grundbausteine mit Alkoxysilyl- und (Meth)Acrylatgruppen jeweils mindestens 0,5 Gew.-% beträgt.

3. Copolymere gemäß Ansprüchen 1 oder 2, dadurch gekennzeichnet, daß die weiteren Grundbausteine solche aus der Gruppe der Carbonsäurevinylester, Maleinsäure, deren Ester und Anhydrid und der Acryl- oder Methacrylsäure oder deren Ester sind.

4. Copolymere gemäß einem der Ansprüche 1 bis 3, dadurch gekennzeichnet, daß sie zusätzlich noch solche Grundbausteine mit zwei C-Atomen in der Kette enthalten, die dem Polymerisat Wasserlöslichkeit oder Wasseremulgierbarkeit verleihen.

5. Verfahren zur Herstellung von Copolymerisaten gemäß einem der Ansprüche 1 bis 4, bei denen einer der Grundbausteine mit einem Acryl- oder Methacrylsäurerest verknüpft ist, dadurch gekennzeichnet, daß man ein Copolymerisat gemäß einem der Ansprüche 1 bis 4, das einen Grundbaustein mit einem α-Halogencarbonsäurerest enthält, mit einem Alkalisalz der Acryl- oder Methacrylsäure umsetzt, wobei pro Grammatom Chlor in dem Ausgangspolymerisat 1 bis 1,5 Mole der Alkaliacrylate oder -methacrylate eingesetzt werden.

6. Verfahren gemäß Anspruch 5, dadurch gekennzeichnet, daß die Umsetzung in Lösung in Gegenwart eines Phasentransferkatalysators durchgeführt wird.

7. Verfahren gemäß Ansprüchen 5 oder 6, dadurch gekennzeichnet, daß die Umsetzung in Gegenwart eines Polymerisationsinhibitors für Acrylverbindungen durchgeführt wird.

8. Verfahren gemäß einem der Ansprüche 5 bis 7, dadurch gekennzeichnet, daß als Phasentransferkatalysator ein quartäres Ammonium- oder Phosphoniumsalz eingesetzt wird.

9. Verwendung der Polymeren gemäß einem der Ansprüche 1 bis 4, bei denen einer der Grundbausteine mit einer Acryl- oder Methacrylgruppe verknüpft ist, als Haftvermittler zwischen anorganisch oxidischem Material und Polymeren.

**Patentansprüche** für den Vertragsstaat: AT

1. Verfahren zur Herstellung von Copolymerisaten, die mindestens zwei verschiedene Grundbausteine mit jeweils zwei Ketten-C-Atomen enthalten, wobei einer der Grundbausteine mit einer Alkoxysilylgruppierung verknüpft ist, dadurch gekennzeichnet, daß man mindestens eine Alkoxysilylverbindung mit einer ethylenisch ungesättigten Gruppierung mit mindestens einem Monomeren mit einer ethylenisch ungesättigten Gruppierung und einem α-Halogencarbonsäurerest, ggf. in Anwesenheit weiterer ethylenisch ungesättigter Verbindungen, die weder einen Alkoxysilylrest noch einen α-Halogencarbonsäurerest enthalten, in an sich bekannter Weise in Gegenwart von radikalbildenden Initiatoren copolymerisiert und das erhaltene Produkt umsetzt, wobei im letzteren Fall pro Grammatom Chlor in dem Ausgangspolymerisat 1 bis 1,5 Mole der Alkaliacrylate oder -methacrylate eingesetzt werden.

2. Verfahren gemäß Anspruch 1, dadurch gekennzeichnet, daß die Umsetzung mit dem Acryl- oder

Methacrylsäuresalz in Lösung in Gegenwart eines Phasentransferkatalysators durchgeführt wird.

3. Verfahren gemäß Anspruch 2, dadurch gekennzeichnet, daß die Umsetzung in Gegenwart eines Polymerisationsinhibitors für Acrylverbindungen durchgeführt wird.

4. Verfahren gemäß Ansprüchen 1 oder 2, dadurch gekennzeichnet, daß als Phasentransferkatalysator ein quartäres Ammonium- oder Phosphoniumsalz eingesetzt wird.

5. Verwendung von Polymeren, die gemäß einem der Ansprüche 1 bis 4 hergestellt sind und bei denen einer der Grundbausteine mit einer Acryl- oder Methacrylgruppe verknüpft ist, als Haftvermittler zwischen anorganisch oxidischem Material und Polymeren.

**Claims** for the Contracting States: BE, CH, DE, FR, GB, IT, LI, LU, NL and SE

1. Copolymers obtained by radical polymerisation which contain at least two different fundamental structural units each with two chain-C-atoms, with one of the fundamental structural units being connected with an alkoxysilyl grouping, characterised in that one fundamental structural unit contains an α-halocarboxylic acid residue whose halogen atom can optionally be substituted by an acrylic acid or methacrylic acid residue and that the alkoxysilyl residue in a second fundamental structural unit is connected either directly or through a

$$-\underset{\underset{O}{\|}}{C}-O-(CH_2)_3$$

-group with the fundamental structural unit.

2. Copolymers according to claim 1, characterised in that they contain as further fundamental structural units with two chain-C-atoms those which are connected neither with a halocarboxylic acid residue nor with an alkoxysilyl group, wherein the amount of the basic structural units with alkoxysilyl - and (meth)acrylate groups as the case may be amounts to at least 0.5 % by weight.

3. Copolymers according to claims 1 or 2, characterised in that the further fundamental structural units are those of the group of carboxylic acid vinyl esters, maleic acid, esters and anhydrides thereof and acrylic or methacrylic acid or esters thereof.

4. Copolymers according to one of claims 1 to 3, characterised in that they additionally contain those fundamental structural units with two C-atoms in the chain which impart water solubility or the capacity for emulsification with water to the polymer.

5. Process for the preparation of copolymers according to one of claims 1 to 4, in which one of the fundamental structural units is connected with an acrylic or methacrylic acid residue, characterised in that a copolymer according to one of claims 1 to 4, which contains a fundamental structural unit with an α-halocarboxylic acid residue is reacted with an alkali metal salt of acrylic or methacrylic acid, with 1 to 1.5 mole of the alkali acrylates or methacrylates being employed per gram atom of chlorine in the starting polymers.

6. Process according to claim 5, characterised in that the reaction is carried out in solution in the presence of a phase transfer catalyst.

7. Process according to claims 5 or 6, characterised in that the reaction is carried out in the presence of a polymerisation inhibitor for acrylic compounds.

8. Process according to one of claims 5 to 7, characterised in that a quaternary ammonium or phosphonium salt is employed as phase transfer catalyst.

9. Use of the polymers according to one of claims 1 to 4, in which one of the fundamental structural units is connected with an acrylic or methacrylic group, as bonding agents between inorganically oxidic material and polymers.

**Claims** for the Contracting State: AT

1. Process for the preparation of copolymers which contain at least two different fundamental structural units each with two chain-C-atoms, with one of the fundamental structural units being connected with an alkoxysilyl grouping, characterised in that at least one alkoxysilyl compound with an ethylenically unsaturated grouping is copolymerised with at least one monomer with an ethylenically unsaturated grouping and an α-halocarboxylic acid residue, optionally in the presence of further ethylenically unsaturated compounds which contain neither an alkoxysilyl residue nor an α-halocarboxylic acid residue, in the presence of radical forming initiators in a known manner, and the product obtained is optionally reacted with an alkali salt of acrylic or methacrylic acid, with, in the latter case, 1 to 1.5 mole of the alkaliacrylate or methacrylate being employed per gram atom of chlorine in the starting polymer.

2. Process according to claim 1, characterised in that the reaction with the acrylic or methacrylic acid salt is carried out in solution in the presence of a phase transfer catalyst.

3. Process according to claim 2, characterised in that the reaction is carried out in the presence of a polymerisation inhibitor for acrylic compounds.

4. Process according to claims 1 or 2, characterised in that a quaternary ammonium or phosphonium salt is employed as phase transfer catalyst.

5. Use of polymers which are produced according to one of claims 1 to 4 and in which one of the fundamental structural units is connected with an acrylic or methacrylic group, as bonding agent between inorganically oxidic material and polymers.

**Revendications** pour les Etats Contractants: BE, CH, DE, FR, GB, IT, LI, LU, NL, SE

1. Copolymères produits par polymérisation radicalaire, qui contiennent au moins deux motifs de base, ou mères, différents comportant à chaque fois deux atomes de C de chaîne, l'un des motifs étant relié à un groupement alcoxysilyle, copolymères caractérisés en ce qu'un motif contient un reste acide α-halogéno-carboxylique dont l'atome d'halogène peut éventuellement être substitué par un reste acide acrylique ou un reste acide méthacrylique et en ce que, dans un second motif, le reste alcoxysilyle est relié, soit directement soit par l'intermédiaire d'un groupe

$$-C(=O)-O-(CH_2)_3-,$$

avec le motif de base.

2. Copolymères selon la revendication 1, caractérisés en ce qu'ils contiennent, comme autres motifs de base, comportant deux atomes de C de chaîne, des motifs qui ne sont reliés ni à un reste acide halogéno-carboxylique ni à un groupe alcoxysilyle, la proportion des motifs comportant des groupes alcoxysilyle et (meth)acrylate représentant à chaque fois au moins 0,5 % en poids.

3. Copolymères selon les revendications 1 ou 2, caractérisés en ce que les autres motifs sont ceux de l'ensemble formé par un ester vinylique d'acide carboxylique, l'acide maléique, ses esters et son anhydride et l'acide acrylique ou méthacrylique ou ses esters.

4. Copolymères selon l'une des revendications 1 à 3, caractérisés en ce qu'ils contiennent en outre des motifs comportant deux atomes de C dans la chaîne et qui confèrent au polymère de la solubilité dans l'eau ou de l'émulsibilité dans l'eau.

5. Procédé pour préparer des copolymères selon l'une des revendications 1 à 4, dans lesquels l'un des motifs de base, ou mère, est relié à un reste acide acrylique ou acide méthacrylique, procédé caractérisé en ce qu'on fait réagir un copolymère selon l'une des revencications 1 à 4, et qui contient un motif comportant un reste acide α-halogénocarboxylique, avec un sel alcalin de l'acide acrylique ou méthacrylique, en utilisant, par atome-gramme de chlore du polymère de départ, 1 à 1,5 mole des acrylates ou méthacrylates alcalins.

6. Procédé selon la revendication 5, caractérisé en ce qu'on conduit la réaction en solution, en présence d'un catalyseur de transfert de phase.

7. Procédé selon les revendications 5 ou 6, caractérisé en ce que l'on conduit la réaction en présence d'un inhibiteur de la polymérisation des composés acryliques.

8. Procédé selon l'une des revendications 5 à 7, caractérisé en ce qu'on utilise, comme catalyseur de transfert de phase, un sel d'ammonium ou de phosphonium quaternaires.

9. Utilisation des polymères selon l'une des revendications 1 à 4, dans lesquels l'un des motifs est relié à un groupe acrylique ou méthacrylique, comme adhésif pour relier une matière minérale oxydée et des polymères.

**Revendications** pour l'Etat Contractant: AT

1. Procédé pour préparer des copolymères, qui contiennent au moins deux motifs de base, ou mères, différents comportant chacun deux atomes de C de chaîne, l'un des motifs étant relié à un groupement alcoxysilyle, procédé caractérisé en ce qu'on copolymérise, de façon connue en soi, en présence d'amorceurs générateurs de radicaux, au moins un composé alcoxysilylique comportant un groupement à insaturation éthylénique avec au moins un monomère comportant un groupement à insaturation éthylénique et un reste acide α-halogéno-carboxylique, en opérant éventuellement en présence d'autres composés à insaturation éthylénique, qui ne contiennent ni un reste alcoxysilyle ni un reste acide α-halogéno-carboxylique et en ce qu'on fait éventuellement réagir le produit ainsi obtenu avec un sel alcalin de l'acide acrylique ou de l'acide méthacrylique, en utilisant dans ce dernier cas, par atome-gramme de chlore du polymère de départ, 1 à 1,5 mole des acrylates ou méthacrylates alcalins

2. Procédé selon la revendication 1, caractérisé en ce qu'on conduit la réaction avec le sel de l'acide acrylique ou de l'acide méthacrylique en opérant en solution, en présence d'un catalyseur de transfert de phase.

3. Procédé selon la revendication 2, caractérisé en ce qu'on conduit la réaction en présence d'un inhibiteur de la polymérisation de composés acryliques

4. Procédé selon les revendications 1 ou 2, caractérisé en ce qu'on utilise, comme catalyseur de transfert de

phase, un sel d'ammonium ou de phosphonium quaternaires.

5. Utilisation de polymères, qui ont été préparés selon l'une des revendications 1 à 4, et dans lesquels l'un des motifs de base, est relié à un groupe acrylique ou méthacrylique, comme adhésif pour relier une matière minérale oxydée et des polymères.